# EUROPÄISCHE PATENTSCHRIFT

(11) **EP 0 550 043 B1**
(45) Veröffentlichungstag und Bekanntmachung des Hinweises auf die Patenterteilung: **06.03.1996**
(21) Anmeldenummer: 92122048.9
(22) Anmeldetag: 28.12.1992
(51) Int. Cl.: E04B 1/74, E04F 13/08, F24J 2/04, F24J 2/40, E04B 1/76

(54) **Wärmedämmverbundsystem**
Thermal insulation compound system
Système composite pour isolation thermique

(30) Priorität: 02.01.1992 DE 4200040
(43) Veröffentlichungstag der Anmeldung: 07.07.1993
(73) Patentinhaber: STO AG, D-79778 Stühlingen (DE)
(72) Erfinder: Grochal, Peter Dr., W-7890 Waldshut-Tiengen 1 (DE)
(74) Vertreter: Patentanwälte Leinweber & Zimmermann

(56) Entgegenhaltungen:
- EP-A- 0 333 145
- EP-A- 0 440 156
- CH-A- 678 203
- US-A- 5 010 113

## Beschreibung

Die Erfindung bezieht sich auf ein Wärmedämmverbundsystem, insbesondere zur Festlegung an einer eine lichtabsorbierende Wandaußenfläche aufweisenden Gebäudewand, welches ein zumindest teilweise lichtdurchlässiges Wärmedämmaterial und außenseitig eine weitgehend lichtdurchlässige putzartige Beschichtung umfaßt.

Bei einem bekannten Wärmedämmverbundsystem dieser Art (EP-A- 0 333 145) hat sich die Tatsache als nachteilig herausgestellt, daß es im Sommer häufig zu einer Überhitzung der Räume kommt. Dies ist deshalb überraschend, weil die Sonne in den Sommermonaten unter einem wesentlich steileren (ungünstigeren) Winkel auf die Wand einstrahlt und man hätte erwarten können, daß insgesamt eine geringere Strahlungsenergiemenge umgesetzt wird. Durch Messungen wurde festgestellt, daß das Wärmedämmverbundsystem eine vom Stand der Sonne abhängige Lichtdurchlässigkeit aufweist, und zwar sinkt die Lichtdurchlässigkeit für die kritischen Mittagsstunden in den Sommermonaten aufgrund des dann gegebenen Sonneneinstrahlwinkels auf ca. 25 bis 30% ab. Durch diese natürliche Winkelabhängigkeit des transparenten Wärmedämmsystems kommt es zu einem gewissen Selbstschutz in den Sommermonaten. Verständlicherweise gilt dies auch für beliebige andere Orte auf der Erde. Mit Annäherung an den Äquator zeigt sich zwar ein wärmeres Klima; der Einstrahlwinkel der Sonne wird jedoch umso steiler. Mit steigender Entfernung vom Äquator ergibt sich demgegenüber ein kälteres Klima; die Sonneneinstrahlung erfolgt dann jedoch unter einem strahlungsgünstigeren Winkel.

Überraschenderweise wurde nun festgestellt, daß sich diese Winkelabhängigkeit der transparenten Wärmedämmsysteme durch die Ausbildung der putzartigen Beschichtung in günstiger Weise beeinflussen läßt.

Der Erfindung liegt die Aufgabe zugrunde, ein Wärmedämmverbundsystem der genannten Art derart weiterzubilden, daß eine Überhitzung des Systems und von Räumen auch im Sommer sicher vermieden ist.

Das Wärmedämmverbundsystem nach der Erfindung zeichnet sich dementsprechend dadurch aus, daß durch die Ausbildung der putzartigen-Beschichtung durch Zusatz von pulverigen Substanzen mit einer Partikelgröße kleiner als 5 µm und einem Brechungsindex zwischen 1,45 und 1,65 die Gesamtlichtdurchlässigkeit des Systems in der Sommerperiode bei hohen Sonnenstandswinkeln ab 60° zur Wandsenkrechten auf Lichttransmissionswerte kleiner als 0,2 abgesenkt ist.

Füllstoffe, die den annähernd gleichen Brechungsindex wie die umliegende lichtdurchlässige Bindemittelmatrix aufweisen, und deren Teilchengröße kleiner als 2,0 µm, vorteilhaft kleiner als 0,3 µm ist, sind für die Lichtstrahlen weitgehend transparent. Sie erzeugen je nach Einsatzmenge und Partikelgröße ggf. eine leichte Trübung, die die Gesamtlichtdurchlässigkeit bei senkrechter Einstrahlung kaum mindert. Die besonders vorteilhaften Lichtbrechungsindizes liegen zwischen 1,45 und 1,65. Erfindungsgemäß wurde festgestellt, daß durch diese Maßnahme für das lichtdurchlässige Wärmedämmverbundsystem ein sehr effektiver Selbstschutz erreicht wird. Die Winkelabhängigkeit der Lichteinstrahlung wird durch diese Maßnahme deutlich ausgeprägt. Bei hohen Sonnenstandswinkeln von 60° bis 70° läßt sich die Lichtdurchlässigkeit des Wärmedämmverbund-systems auf ca. 0,1 bis 0,2 absenken.

Besonders geeignet erscheinen feine Füllstoffe auf der Basis der Silikate, wie Aluminium- oder Magnesiumsilikate, sowie Carbonate (z.B. Kieselgel, Kaolin, Talkum, Calciumcarbonat).

Eine besonders vorteilhafte Doppelauswirkung bieten Füllstoffe, die außer der Reduzierung der Lichtdurchlässigkeit bei hohen Winkeln z.B. auch die Brandeigenschaften verbessern. Es sind dies vor allem Verbindungen des Phosphors und des Stickstoffs (z.B. Ammonium(poli)phosphat), ggf. halogeniert (z.B. Sandoflamm 5060), und besonders Aluminiumhydroxide.

Eine weitere Variante stellen sogenannte transparente Farbstoffe dar, die neben der wichtigen Absenkung der Lichtdurchlässigkeit unter stärkeren Einstrahlwinkeln zusätzlich eine lasierende Farbgebung des lichtdurchlässigen Putzes ergeben. Die Erfindung richtet sich somit auch auf lasierende Farbstoffe, die neben der Lichtdurchlässigkeitsminderung zusätzlich eine farbgebende Wirkung ausüben.

Weitere Einzelheiten, Vorteile und Merkmale ergeben sich aus der folgenden Beschreibung anhand der Zeichnung, auf die bezüglich einer Offenbarung aller im Text nicht erwähnten Einzelheiten ausdrücklich hingewiesen wird. Es zeigen:
- Fig. 1: den für Stuttgart gegebenen Sonnenstandswinkel (Neigungswinkel) während der Sommermonate
- Fig. 2: die Lichtdurchlässigkeit (Transparenz) eines Wärmeverbundsystems mit einer Standardbeschichtung im Vergleich zur Beschichtung mit einer modifizierten Beschichtung, die pulverige Füllstoffe enthält, in Abhängigkeit vom Sonnenstandswinkel (Neigungswinkel),
- Fig. 3: die Lichtdurchlässigkeit (Transparenz) bei Füllstoffzugabe in Form von flammhemmenden Substanzen in Abhängigkeit vom Sonnenstandswinkel (Neigungs-winkel) und
- Fig. 4: die Lichtdurchlässigkeit (Transparenz) bei Füllstoffzugabe in Form von lasierenden Farbstoffen in Abhängigkeit vom Sonnenstandswinkel (Neigungswinkel).

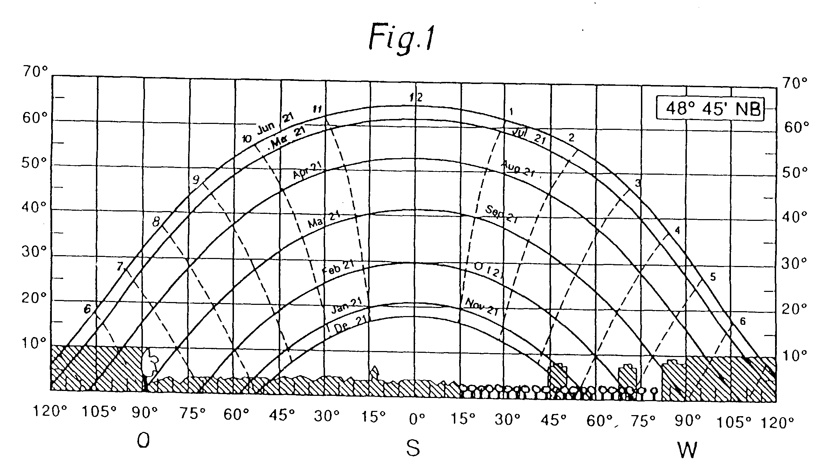

Wie bekannt und in Fig. 1 veranschaulicht, steht die Sonne in den Sommermonaten höher am Himmel und strahlt deshalb unter einem ungünstigeren, weil steileren Winkel auf die mit dem transparenten Wärmedämmverbundsystem versehene, in der Zeichnung nicht näher veranschaulichte Wand ein. Die speziellen, aus der Darstellung entnehmbaren Verhältnisse gelten für Stuttgart, d.h. alle Orte, die auf 48° 45' nördlicher Breite liegen. Mit kleiner werdendem Winkel, d.h. bei Annäherung an den Äquator nimmt der Einstrahlwinkel weiter zu, d.h. die Sonne strahlt unter einem steileren Winkel auf die Wand ein.

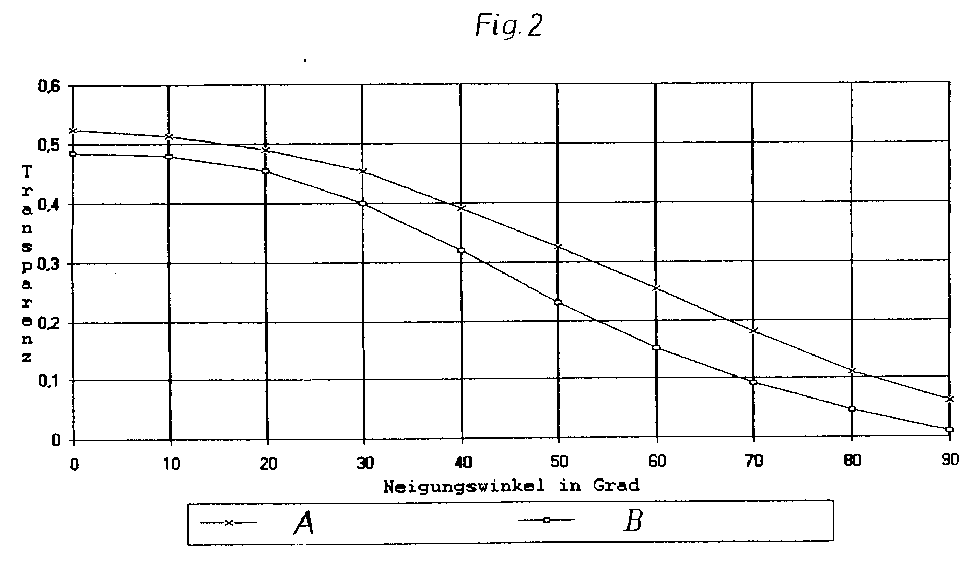

Aus Fig. 2 ergibt sich nun, daß die Lichtdurchlässigkeit erwartungsgemäß mit wachsendem Einstrahlwinkel abnimmt. In den Mittagsstunden, d.h. bei hohem Sonnenstand kann der Anteil des durchtretenden Lichts, der in Wärme umgewandelt wird, dennoch eine solche Größe erreichen, daß sich eine unangenehme Aufheizung der Räume ergibt.

Durch die in Fig. 2 bezüglich ihrer Auswirkungen verdeutlichte Beigabe von Füllstoffen mit kleiner Teilchengröße wird erreicht, daß bei hohen Neigungswinkeln der Sonneneinstrahlung von etwa 60° bis 70° die Lichtdurchlässigkeit ganz beträchtlich vermindert wird. Dies verdeutlicht die füllstoffmodifizierte Beschichtung B im Vergleich zur Standardbeschichtung A.

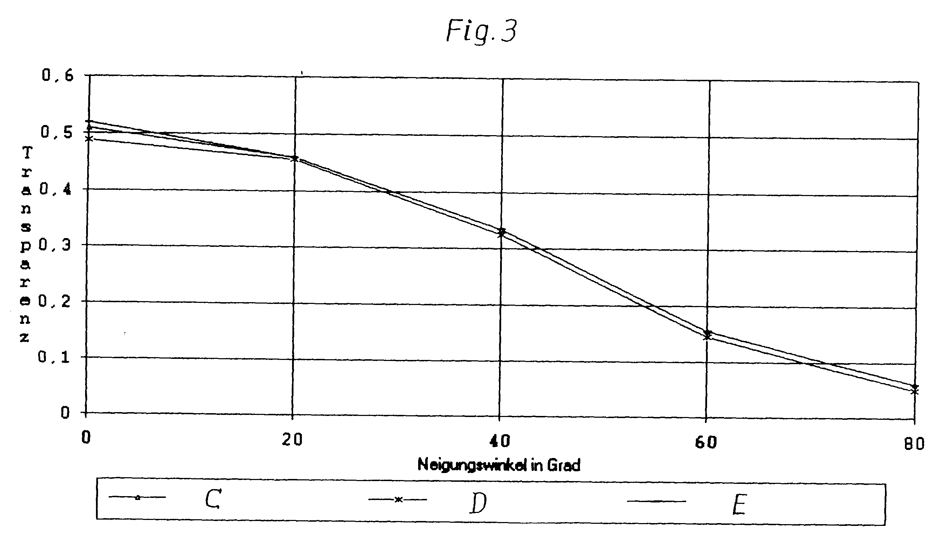

In Fig. 3 ist ebenfalls die winkelabhängige Wirkung der Füllstoffsubstanzen verdeutlicht. Gezeigt sind drei etwa gleiche Verhältnisse zeigende Kurven, und zwar für Exolith 462 - Kurve C - , Al(OH)₃ - Kurve D - sowie Sandoflamm 5060 - Kurve E -. Auch in diesen Kurven für die zusätzlich die Brandeigenschaften verbessernden Substanzen ergibt sich deren winkelabhängige Wirkung.

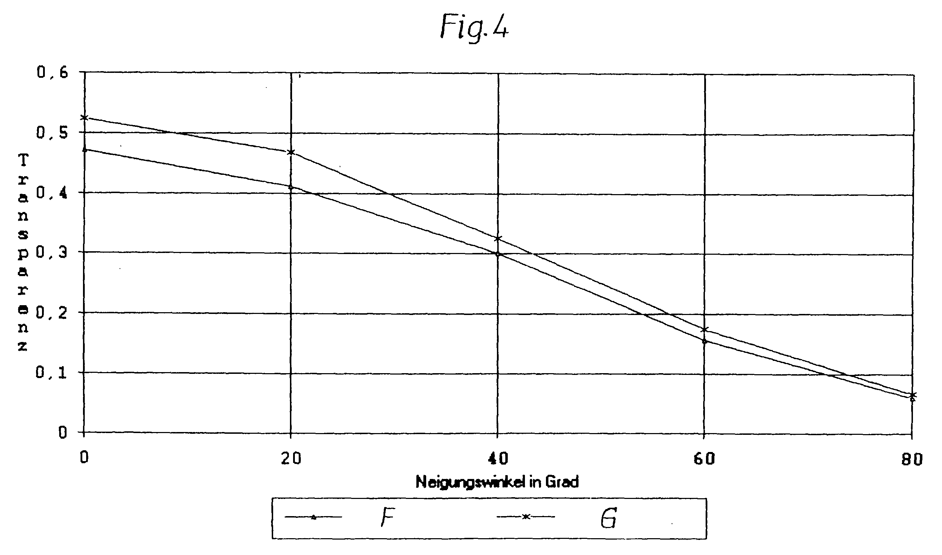

In Fig. 4 ist veranschaulicht, daß auch zusätzlich eine Farbwirkung erzeugende transparente Farbstoffe, die eine lasierende Farbgebung mit sich bringen, als Füllstoffe geeignet sind, die Lichtdurchlässigkeit auf die gewünschte Weise bei steiler Lichteinstrahlung absenken. Gezeigt ist die Transparentabnahme mit wachsendem Lichteinfallswinkel bei Einsatz von Ös 153 blau (unversiegel), und zwar einmal für einen Anteil von 0.01% - Kurve F - und zum anderen für einen Anteil von 0,1% - Kurve G -.

## Patentansprüche

1. Wärmedämmverbundsystem, insbesondere zur Festlegung an einer eine lichtabsorbierende Wandaußenfläche aufweisenden Gebäudewand, welches ein zumindest teilweise lichtdurchlässiges Wärmedämmaterial und außenseitig eine weitgehend lichtdurchlässige putzartige Beschichtung umfaßt, dadurch gekennzeichnet, daß durch die Ausbildung der putzartigen Beschichtung durch Zusatz von pulverigen Substanzen mit einer Partikelgröße kleiner als 5 µm und einem Brechungsindex zwischen 1,45 und 1,65 die Gesamtlichtdurchlässigkeit des Systems in der Sommerperiode bei hohen Sonnenstandswinkeln, ab 60° zur Wandsenkrechten auf Lichttransmissionswerte kleiner als 0,2 abgesenkt ist.

2. Wärmedämmverbundsystem nach Anspruch 1, dadurch gekennzeichnet, daß die zugesetzten Substanzen Füllstoffe in Form von Quarzen, Kieselgelen, Aluminium- und Magnesiumsilikaten und Carbonaten sind.

3. Wärmedämmverbundsystem nach Anspruch 1, dadurch gekennzeichnet, daß die zugesetzten Substanzen Füllstoffe in Form von Verbindungen des Phosphors und Stickstoffs, ggf. halogeniert, oder in Form von Aluminiumhydroxiden sind, die neben der Lichtdurchlässigkeitsminderung zusätzlich eine flammhemmende Wirkung ausüben.

4. Wärmedämmverbundsystem nach Anspruch 1, dadurch gekennzeichnet, daß die zugesetzten Substanzen durch lasierende Farbstoffe gebildet sind, die neben der Lichtdurchlässigkeitsminderung zusätzlich eine farbgebende Wirkung ausüben.

## Claims

1. Composite thermal insulation system, particularly for fastening to a building wall having a light-absorbing outer surface, comprising a thermal insulating material which is at least partially light-transmissive and, on the outside, a largely light-transmissive plaster-like coating, characterised in that by forming the plaster-like coating by the addition of pulverulent substances having a particle size smaller than 5µm and a refractive index between 1.45 and 1.65 the total light transmission of the system in the summer period with high angles of altitude of the sun, from 60° upwards, relative to the perpendicular of the wall, is reduced to light transmission values below 0.2.

2. Composite thermal insulation system according to Claim 1, characterised in that the added substances are fillers in the form of quartzes, silica gels, aluminium and magnesium silicates and carbonates.

3. Composite thermal insulation system according to Claim 1, characterised in that the added substances are fillers in the form of optionally halogenated compounds of phosphorus and nitrogen, or in the form of aluminium hydroxides which, in addition to the reduction of light transmission, also have a flame-retarding action.

4. Composite thermal insulation system according to Claim 1, characterised in that the added substances are in the form of glazing pigments which, in addition to the reduction of light transmission, also have a colouring action.

## Revendications

1. Système composite pour isolation thermique, en particulier pour fixation à un mur de bâtiment présentant une surface absorbant la lumière, qui comprend un matériau d'isolation thermique au moins partiellement transparent, et, extérieurement, un enduit de type crépi largement transparent, caractérisé en ce que, par la conformation du revêtement de type crépi par l'apport de substances pulvérulentes dont la taille des particules est inférieure à 5 µm et l'indice de réfraction compris entre 1,45 et 1,65, la transparence totale du système, pendant la période d'été lors de grands angles de la position du soleil, à partir de 60° par rapport à la perpendiculaire au mur, est diminuée pour atteindre des valeurs de transmission de lumière inférieures à 0,2.

2. Système composite pour isolation thermique selon la revendication 1, caractérisé en ce que les substances ajoutées sont des matériaux de remplissage de type quartz, gels de silice, silicates d'aluminium ou de magnésium et des carbonates.

3. Système composite pour isolation thermique selon la revendication 1, caractérisé en ce que les substances ajoutées sont des matériaux de remplissage de type composés du phosphore et de l'azote, éventuellement halogénés, ou de type hydroxydes d'aluminium, qui, en plus de la diminution de la transparence, exercent un effet ignifugeant.

4. Système composite pour isolation thermique selon la revendication 1, caractérisé en ce que les substances ajoutées sont formées de colorants glaçants, qui en plus de la diminution de la transparence, exercent un effet de coloration.
